(19) Europäisches Patentamt
European Patent Office
Office européen des brevets

(11) **EP 4 592 614 A2**

(12) **EUROPEAN PATENT APPLICATION**

(43) Date of publication:
**30.07.2025 Bulletin 2025/31**

(21) Application number: **25180980.2**

(22) Date of filing: **20.07.2022**

(51) International Patent Classification (IPC):
***F25B 1/00*** *(2006.01)*

(52) Cooperative Patent Classification (CPC):
**C09K 5/045;** C09K 2205/126; C09K 2205/22;
C09K 2205/40; Y02P 20/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.09.2021 JP 2021148113**

(62) Document number(s) of the earlier application(s) in
accordance with Art. 76 EPC:
**22867089.9 / 4 400 555**

(71) Applicant: **Daikin Industries, Ltd.**
**Osaka-shi, Osaka 530-0001 (JP)**

(72) Inventors:
• **Itano, Mitsushi**
**Osaka-shi, Osaka, 530-0001 (JP)**
• **Tsuchiya, Tatsumi**
**Osaka-shi, Osaka, 530-0001 (JP)**

• **Nakaue, Tsubasa**
**Osaka-shi, Osaka, 530-0001 (JP)**
• **Gotou, Tomoyuki**
**Osaka-shi, Osaka, 530-0001 (JP)**
• **Usui, Takashi**
**Osaka-shi, Osaka, 530-0001 (JP)**
• **Yoshimura, Takashi**
**Osaka-shi, Osaka, 530-0001 (JP)**

(74) Representative: **Hoffmann Eitle**
**Patent- und Rechtsanwälte PartmbB**
**Arabellastraße 30**
**81925 München (DE)**

Remarks:
This application was filed on 05-06-2025 as a
divisional application to the application mentioned
under INID code 62.

(54) **COMPOSITION CONTAINING REFRIGERANT, USE OF SAME, REFRIGERATOR COMPRISING SAME, AND METHOD FOR OPERATING REFRIGERATOR**

(57) Provided is a novel low-GWP mixed refrigerant. A composition comprising a refrigerant, the refrigerant comprising trans-1,2-difluoroethylene (HFO-1132(E)), 2,3,3,3-tetrafluoropropene (HFO-1234yf), and 1,1,1,2-tetrafluoroethane (R134a), the total content of HFO-1132(E), HFO-1234yf, and R134a being 99.5 mass% or more based on the total of the refrigerant.

EP 4 592 614 A2

**Description**

Technical Field

The present disclosure relates to a composition comprising a refrigerant, use of the composition, a refrigerating machine having the composition, and a method for operating the refrigerating machine.

Background Art

As a working medium for a heat cycle that can replace R410A, a working medium for a heat cycle comprising trifluoroethylene (HFO-1123) and 1,2-difluoroethylene (HFO-1132) has been proposed (Patent Literature (PTL) 1).

Citation List

Patent Literature

PTL 1: WO2015/141678

Summary of Invention

Technical Problem

An object of the present disclosure is to provide a novel low-GWP mixed refrigerant.

Solution to Problem

Item 1

A composition comprising a refrigerant, wherein the refrigerant comprises trans-1,2-difluoroethylene (HFO-1132(E)), 2,3,3,3-tetrafluoropropene (HFO-1234yf), and 1,1,1,2-tetrafluoroethane (R134a), and the total content of HFO-1132(E), HFO-1234yf, and R134a is 99.5 mass% or more based on the total of the refrigerant.

Item 2.

The composition according to Item 1, wherein the content of HFO-1132(E) is 14.0 to 44.0 mass%, the content of HFO-1234yf is 35.2 to 79.0 mass%, and the content of R134a is 7.0 to 20.8 mass%, based on the total of HFO-1132(E), HFO-1234yf, and R134a.

Item 3.

The composition according to Item 1, wherein the content of HFO-1132(E) is 21.0 to 44.0 mass%, the content of HFO-1234yf is 35.2 to 72.0 mass%, and the content of R134a is 7.0 to 20.8 mass%, based on the total of HFO-1132(E), HFO-1234yf, and R134a.

Item 4.

A composition comprising a refrigerant, wherein the refrigerant comprises HFO-1132(E), HFO-1234yf, and pentafluoroethane (R125), and the total content of HFO-1132(E), HFO-1234yf, and R125 being 99.5 mass% or more is on the total of the refrigerant.

Item 5.

The composition according to Item 4, wherein the content of HFO-1132(E) is 11.5 to 44.0 mass%, the content of HFO-1234yf is 47.5 to 85.5 mass%, and the content of R125 is 3.0 to 8.5 mass%, based on the total of HFO-1132(E), HFO-1234yf, and R125.

Item 6.

The composition according to Item 4, wherein the content of HFO-1132(E) is 21.0 to 44.0 mass%, the content of HFO-1234yf is 47.5 to 76.0 mass%, and the content of R125 is 3.0 to 8.5 mass%, based on the total of HFO-1132(E), HFO-1234yf, and R125.

Item **7.**

A composition comprising a refrigerant, wherein the refrigerant comprises HFO-1132(E), HFO-1234yf, and 1,1,2,3,3,3-hexafluoro-1-propene (FO-1216).

Item **8.**

The composition according to Item 7, wherein the content of HFO-1132(E) is 12.5 to 44.0 mass%, the content of HFO-1234yf is 16.0 to 72.5 mass%, and the content of FO-1216 is 15.0 to 40.0 mass%, based on the total of HFO-1132(E), HFO-1234yf, and FO-1216.

Item **9.**

The composition according to Item 7, wherein the content of HFO-1132(E) is 21.0 to 44.0 mass%, the content of HFO-1234yf is 16.0 to 64.0 mass%, and the content of FO-1216 is 15.0 to 40.0 mass%, based on the total of HFO-1132(E), HFO-1234yf, and FO-1216.

Item 10.

The composition according to any one of Items 1 to 9, for use as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R502, R507, R513A, R1234yf, or R1234ze.

Item 11.

The composition according to any one of Items 1 to 9, for use in operating an air-conditioning system for vehicles.

Item 12.

The composition according to Item 11, wherein the air-conditioning system is for use in gasoline vehicles, hybrid vehicles, electric vehicles, or hydrogen vehicles.

Item 13.

The composition according to any one of Items 1 to 9, wherein the composition further comprises a refrigeration oil, for use as a working fluid in a refrigeration apparatus.

Item 14.

A refrigeration method comprising a step of operating a refrigeration cycle using the composition of any one of Items 1 **to 9.**

Item 15.

A refrigeration apparatus comprising the composition of any one of Items 1 to 9 as a working fluid.

Advantageous Effects of Invention

The refrigerant according to the present disclosure has a low GWP.

Brief Description of Drawings

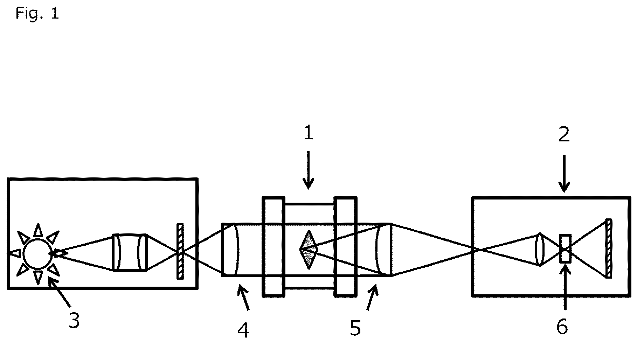

Fig. 1 is a schematic view of an apparatus used in a flammability test.

Description of Embodiments

The present inventors conducted intensive studies to solve the above problem, and consequently found that various mixed refrigerants described below have the above properties.

The present disclosure has been completed as a result of further research based on this finding. The present disclosure includes the following embodiments.

Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC).

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid in a refrigerating machine, and (3) a working fluid in a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, the term "air-conditioning system for vehicles" is a type of refrigeration apparatus for use in vehicles, such as gasoline vehicles, hybrid vehicles, electric vehicles, and hydrogen vehicles. The air-conditioning system for vehicles refers to a refrigeration apparatus that has a refrigeration cycle in which heat exchange is performed by an evaporator using a liquid refrigerant, the evaporated refrigerant gas is absorbed by a compressor, the adiabatically compressed refrigerant gas is cooled and liquefied with a condenser, the liquefied refrigerant is adiabatically expanded by passing it through an expansion valve, and then the refrigerant is supplied again in the form of a liquid to the evaporator.

The unit for the pressure described in the present specification is absolute pressure, unless otherwise specified.

1. Refrigerant

The refrigerant according to the present disclosure comprises HFO-1132(E) and HFO-1234yf.

The refrigerant according to the present disclosure is a low-GWP mixed refrigerant.

The refrigerant according to the present disclosure may be a refrigerant comprising trans-1,2-difluoroethylene (HFO-1132(E)), 2,3,3,3-tetrafluoropropene (HFO-1234yf), and 1,1,1,2-tetrafluoroethane (R134a), the total content of HFO-1132(E), HFO-1234yf, and R134a being 99.5 mass% or more based on the total of the refrigerant.

In the refrigerant according to the present disclosure, the content of HFO-1132(E) may be 14.0 to 44.0 mass%, the content of HFO-1234yf may be 35.2 to 79.0 mass%, and the content of R134a may be 7.0 to 20.8 mass%, based on the total of HFO-1132(E), HFO-1234yf, and R134a. This refrigerant has a GWP of 300 or less, a COP ratio of 100% or more relative to that of HFO-1234yf, a refrigerating capacity ratio of 134% or more relative to that of HFO-1234yf, a burning velocity that, by containing 7.0 mass% or more of R134a, is reduced by 1.0 cm/s or more compared with the same composition except that R134a is not contained, and a boiling point of -40.0°C or less, and further does not undergo a disproportionation reaction at 3 MPa and 150°C.

Thus, the refrigerant according to the present disclosure is preferable because a disproportionation reaction can be suppressed even when the refrigerant pressure is locally 3 MPa and the refrigerant temperature is locally 150°C in the refrigeration cycle.

Moreover, the refrigerant according to the present disclosure has the advantage of ease of use in heating with a heat pump since it has a boiling point of -40.0°C or less. For example, using the refrigerant according to the present disclosure for operating a refrigeration cycle in an air-conditioning system for vehicles is advantageous in enabling heating with a heat pump that consumes less power than electric heaters. Examples of air-conditioning systems for vehicles include air-conditioning systems for gasoline vehicles, hybrid vehicles, electric vehicles, and hydrogen vehicles.

In the refrigerant according to the present disclosure, the content of HFO-1132(E) may be 21.0 to 44.0 mass%, the content of HFO-1234yf may be 35.2 to 72.0 mass%, and the content of R134a may be 7.0 to 20.8 mass%, based on the total of HFO-1132(E), HFO-1234yf, and R134a.

In the refrigerant according to the present disclosure, the content of HFO-1132(E) may be 14.0 to 44.0 mass%, the content of HFO-1234yf may be 35.2 to 79.0 mass%, and the content of R134a may be 7.0 to 20.8 mass%, based on the total of HFO-1132(E), HFO-1234yf, and R134a. This refrigerant is preferably used to operate air-conditioning systems for vehicles.

The refrigerant according to the present disclosure may be a refrigerant comprising HFO-1132(E), HFO-1234yf, and pentafluoroethane (R125), the total content of HFO-1132(E), HFO-1234yf, and R125 being 99.5 mass% or more based on the total of the refrigerant.

In the refrigerant according to the present disclosure, the content of HFO-1132(E) may be 11.5 to 44.0 mass%, the content of HFO-1234yf may be 47.5 to 85.5 mass%, and the content of R125 may be 3.0 to 8.5 mass%, based on the total of HFO-1132(E), HFO-1234yf, and R125. This refrigerant has a GWP of 300 or less, a COP ratio of 100% or more relative to that of HFO-1234yf, a refrigerating capacity ratio of 128% or more relative to that of HFO-1234yf, a burning velocity of 1.5 cm/s or less, which is a burning velocity that, by containing 3.0 mass% or more of R125, is reduced by 1.0 cm/s or more compared with the same composition except that R125 is not contained, and a boiling point of -40.0°C or less, and further does not undergo a disproportionation reaction at 3 MPa and 150°C.

Thus, the refrigerant according to the present disclosure is preferable because a disproportionation reaction can be suppressed even when the refrigerant pressure is locally 3 MPa and the refrigerant temperature is locally 150°C in the refrigeration cycle.

Moreover, the refrigerant according to the present disclosure has the advantage of ease of use in heating with a heat pump since it has a boiling point of -40.0°C or less. For example, using the refrigerant according to the present disclosure for operating a refrigeration cycle in an air-conditioning system for vehicles is advantageous in enabling heating with a heat pump that consumes less power than electric heaters. Examples of air-conditioning systems for vehicles include air-conditioning systems for gasoline vehicles, hybrid vehicles, electric vehicles, and hydrogen vehicles.

In the refrigerant according to the present disclosure, the content of HFO-1132(E) may be 21.0 to 44.0 mass%, the content of HFO-1234yf may be 47.5 to 76.0 mass%, and the content of R125 may be 3.0 to 8.5 mass%, based on the total of HFO-1132(E), HFO-1234yf, and R125.

In the refrigerant according to the present disclosure, the content of HFO-1132(E) may be 11.5 to 44.0 mass%, the content of HFO-1234yf may be 47.5 to 85.5 mass%, and the content of R125 may be 3.0 to 8.5 mass%, based on the total of HFO-1132(E), HFO-1234yf, and R125.

The refrigerant according to the present disclosure may comprise HFO-1132(E), HFO-1234yf, and 1,1,2,3,3,3-hexafluoro-1-propene (FO-1216).

In the refrigerant according to the present disclosure, the content of HFO-1132(E) may be 12.5 to 44.0 mass%, the content of HFO-1234yf may be 16.0 to 72.5 mass%, and the content of FO-1216 may be 15.0 to 40.0 mass%, based on the total of HFO-1132(E), HFO-1234yf, and FO-1216. This refrigerant has a GWP of 3 or less, a COP ratio of 99% or more relative to that of HFO-1234yf, a refrigerating capacity ratio of 128% or more relative to that of HFO-1234yf, a burning velocity that, by containing 15.0% mass% or more of FO-1216, is reduced by 1.0 cm/s or more, and a boiling point of -40.0°C or less, and further does not undergo a disproportionation reaction at 3 MPa and 150°C.

Thus, the refrigerant according to the present disclosure is preferable because a disproportionation reaction can be suppressed even when the refrigerant pressure is locally 3 MPa and the refrigerant temperature is locally 150°C in the refrigeration cycle.

Moreover, the refrigerant according to the present disclosure has the advantage of ease of use in heating with a heat pump since it has a boiling point of -40.0°C or less. For example, using the refrigerant according to the present disclosure for operating a refrigeration cycle in an air-conditioning system for vehicles is advantageous in enabling heating with a heat pump that consumes less power than electric heaters. Examples of air-conditioning systems for vehicles include air-conditioning systems for gasoline vehicles, hybrid vehicles, electric vehicles, and hydrogen vehicles.

In the refrigerant according to the present disclosure, the content of HFO-1132(E) may be 21.0 to 44.0 mass%, the content of HFO-1234yf may be 16.0 to 72.5 mass%, and the content of FO-1216 may be 15.0 to 40.0 mass%, based on the total of HFO-1132(E), HFO-1234yf, and FO-1216.

In the refrigerant according to the present disclosure, the content of HFO-1132(E) may be 21.0 to 44.0 mass%, the content of HFO-1234yf may be 16.0 to 64.0 mass%, and the content of FO-1216 may be 15.0 to 40.0 mass%, based on the total of HFO-1132(E), HFO-1234yf, and FO-1216.

When the refrigerant according to the present disclosure comprises HFO-1132(E), HFO-1234yf, and R134a, the refrigerant according to the present disclosure may further comprise additional refrigerants, in addition to HFO-1132(E), HFO-1234yf, and R134a, as long as the above properties and effects are not impaired. In this respect, in one embodiment, the refrigerant according to the present disclosure preferably comprises HFO-1132 (E), HFO-1234yf, and R134a in a total amount of 99.7 mass% or more, more preferably 99.75 mass% or more, even more preferably 99.9 mass% or more, still even more preferably 99.999 mass% or more, and most preferably 99.9999 mass% or more, based on the entire refrigerant. The refrigerant according to the present disclosure may essentially consist of HFO-1132(E), HFO-1234yf, and R134a. In this case, the refrigerant according to the present disclosure may consist of HFO-1132(E), HFO-1234yf, and R134a, as well as unavoidable impurities. The refrigerant according to the present disclosure may consist of HFO-1132(E), HFO-1234yf, and R134a.

When the refrigerant according to the present disclosure comprises HFO-1132(E), HFO-1234yf, and R125, the refrigerant according to the present disclosure may further comprise additional refrigerants, in addition to HFO-1132(E), HFO-1234yf, and R125, as long as the above properties and effects are not impaired. In this respect, in one embodiment, the refrigerant according to the present disclosure preferably comprises HFO-1132(E), HFO-1234yf, and R125 in a total amount of 99.7 mass% or more, more preferably 99.75 mass% or more, even more preferably 99.9 mass% or more, still even more preferably 99.999 mass%, and most preferably 99.9999 mass% or more, based on the entire refrigerant. The refrigerant according to the present disclosure may essentially consist of HFO-1132(E), HFO-1234yf, and R125. In this case, the refrigerant according to the present disclosure may consist of HFO-1132(E), HFO-1234yf, and R125, as well as unavoidable impurities. The refrigerant according to the present disclosure may consist of HFO-1132(E), HFO-1234yf, and R125.

When the refrigerant according to the present disclosure comprises HFO-1132(E), HFO-1234yf, and FO-1216, the refrigerant according to the present disclosure may further comprise additional refrigerants, in addition to HFO-1132(E), HFO-1234yf, and FO-1216, as long as the above properties and effects are not impaired. In this respect, in one embodiment, the refrigerant according to the present disclosure preferably comprises HFO-1132 (E), HFO-1234yf, and FO-1216 in a total amount of 99.5 mass% or more, more preferably 99.75 mass% or more, even more preferably 99.9 mass% or more, still even more preferably 99.999 mass%, and most preferably 99.9999 mass% or more, based on the entire refrigerant. The refrigerant according to the present disclosure may essentially consist of HFO-1132(E), HFO-1234yf, and FO-1216. In this case, the refrigerant according to the present disclosure may consist of HFO-1132(E), HFO-1234yf, and FO-1216, as well as unavoidable impurities. The refrigerant according to the present disclosure may consist of HFO-1132(E), HFO-1234yf, and FO-1216.

Additional refrigerants are not limited and can be widely selected. The mixed refrigerant may contain one additional refrigerant, or two or more additional refrigerants.

Examples of the additional refrigerants include acetylene, HFO-1132a, HFO-1141, HFO-1123, HFC-143a, HFC-134a, Z-HFO-1132, HFO-1243zf, HFC-245cb, HCFC-1122, HCFC-124, CFC-1113, and 3,3,3-trifluoropropyne.

2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid in a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 1 mass% or less, and more preferably 0.1 mass% or less.

2.1 Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

2.2 Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, a hydrochlorofluorocarbon, a chlorofluorocarbon, a hydrochlorocarbon, a fluorocarbon, or a fluoroether.

The following compounds are preferred as the tracer.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3F$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)
HFC-143a (1,1,1-trifluoroethane, $CF_3CH_3$)
HFC-143 (1,1,2-trifluoroethane, $CHF_2CH_2F$)
HFC-152a (1,1-difluoroethane, $CHF_2CH_3$)
HFC-152 (1,2-difluoroethane, $CH_2FCH_2F$)
HFC-161 (fluoroethane, $CH_3CH_2F$)
HFC-245fa (1,1,1, 3, 3-pentafluoropropane, $CF_3CH_2CHF_2$)
HFC-236fa (1,1,1, 3, 3, 3-hexafluoropropane, $CF_3CH_2CF_3$)
HFC-236ea (1,1,1,2,3,3-hexafluoropropane, $CF_3CHFCHF_2$)
HFC-227ea (1,1,1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
CFC-1113 (chlorotrifluoroethylene, $CF_2=CClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH2CF_3$)

The refrigerant composition according to the present disclosure may comprise one or more tracers at a total concentration of about 10 parts per million by weight (ppm) or more based on the entire refrigerant composition. The refrigerant composition according to the present disclosure may comprise one or more tracers at a total concentration of about 1000 ppm or less, based on the entire refrigerant composition. The refrigerant composition according to the present disclosure preferably comprises one or more tracers at a total concentration of about 30 ppm or more, and more preferably about 50 ppm or more, based on the entire refrigerant composition. The refrigerant composition according to the present disclosure preferably comprises one or more tracers at a total concentration of about 500 ppm or less, and more preferably about 300 ppm or less, based on the entire refrigerant composition.

2.3 Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

2.4 Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is preferably 0.01 mass% or more, and more preferably 0.05 mass% or more, based on the entire refrigerant. The content of the stabilizer is preferably 5 mass% or less, and more preferably 2 mass% or less, based on the entire refrigerant.

2.5 Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is preferably 0.01 mass% or more, and more preferably 0.05 mass% or more, based on the entire refrigerant. The content of the polymerization inhibitor is preferably 5 mass% or less, and more preferably 2 mass% or less, based on the entire refrigerant.

3. Refrigeration Oil-Containing Working Fluid

The refrigeration oil-containing working fluid according to the present disclosure comprises at least the refrigerant or refrigerant composition according to the present disclosure and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 mass% or more of refrigeration oil. The refrigeration oil-containing working fluid generally comprises 50 mass% or less of refrigeration oil.

3.1 Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extremepressure agents, acid scavengers, oxygen scavengers, copper deactivators, rust inhibitors, oil agents, and antifoaming agents.

A refrigeration oil with a kinematic viscosity of 5 cSt or more at 40°C is preferable from the standpoint of lubrication. Further, a refrigeration oil with a kinematic viscosity of 400 cSt or less at 40°C is preferable from the standpoint of lubrication.

The refrigeration oil-containing working fluid according to the present disclosure may further optionally contain at least one additive. Examples of additives include compatibilizing agents described below.

3.2 Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

5. Method for Suppressing Disproportionation Reaction

The method for suppressing a disproportionation reaction according to the present disclosure is a method for suppressing a disproportionation reaction of HFO-1132(E), the method comprising operating a refrigeration cycle using the refrigerant according to the present disclosure.

The method for suppressing a disproportionation reaction according to the present disclosure produces an effect of preventing a disproportionation reaction of HFO-1132 (E) from occurring, in particular, even at a refrigerant pressure of 3.0 MPa and a refrigerant temperature of 150°C.

By the method for suppressing a disproportionation reaction according to the present disclosure, a refrigeration cycle can also be operated while suppressing a disproportionation reaction, in a refrigerating machine that has no particular means for suppressing a disproportionation reaction.

6. Use for Suppressing Disproportionation Reaction

The use according to the present disclosure is use of R134a, R125, or FO-1216, and R1234yf for suppressing a disproportionation reaction of HFO-1132(E); the suppression of the disproportionation reaction is achieved by mixing HFO-1132 (E) with R134a, R125, or FO-1216, and R1234yf such that the mixing ratio thereof is equal to that used in the refrigerant according to the present disclosure.

The use for suppressing a disproportionation reaction according to the present disclosure produces an effect of preventing a disproportionation reaction of HFO-1132(E) from occurring, in particular, even at a refrigerant pressure of 3.0 MPa and a refrigerant temperature of 150°C.

The embodiments are described above; however, it will be understood that various changes in forms and details can be made without departing from the spirit and scope of the claims.

Examples

The present disclosure is described in more detail below with reference to Examples. However, the present disclosure is not limited to the Examples.

Mixed refrigerants were prepared by mixing HFO-1132 (E) and HFO-1234yf at the mass% shown in Table 1 based on their sum.

Each of these mixed refrigerants was examined in terms of the presence or absence of a disproportionation reaction by using the following test methods under the following conditions.

Test Methods

A refrigerant composition to be tested was transferred to a test container and heated to 150°C. Subsequently, a Pt wire in the container was melted and cut by applying a voltage, giving the refrigerant composition 30 J of energy. The presence or absence of disproportionation reaction was determined based on a rapid increase in the pressure and temperature in the apparatus.

Test Conditions

 Test container: 38-cc SUS container
 Test temperature: 150°C
 Pressure: 3 MPa

Determination Criteria

Non-explosion: The temperature or pressure after the melting and cutting of the Pt wire increased to less than twice, and no rapid disproportionation reaction occurred.

Explosion: The temperature or pressure increased to twice or more after the melting and cutting of the Pt wire, and a rapid disproportionation reaction occurred.

A burning velocity test was performed using the apparatus shown in Fig. 1 in the following manner. First, the mixed refrigerants were purified to 99.5% or more, and were deaerated by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The propagation of the flame was visualized by schlieren photography. A cylindrical container (inner diameter: 155 mm, length: 198 mm) equipped with two light-transmissive acrylic windows was used as the sample cell, and a xenon lamp was used as the light source. Schlieren images of the flame were recorded by a high-speed digital video camera at a frame rate of 600 fps and stored on a PC. The burning velocity (Su (cm/s)) is expressed by the volume of unburned gas consumed by the flame surface of a unit area per unit time and is calculated by using the following formula.

$$Su = Sb * \rho u / \rho b$$

Sb: flame propagation rate (cm/s)
$\rho u$: adiabatic flame temperature (unburned)
$\rho b$; adiabatic flame temperature (burned)

Sb was determined from the schlieren video images. $\rho u$ was calculated from a measurement temperature. $\rho b$ was calculated from the combustion heat and isobaric specific heat of combustion gas.

Table 1

| Item | Unit | Experimental Series 1 | | |
|---|---|---|---|---|
| | | Comparative Example 4 | Example 6 | Example 7 |
| HFO-1132 (E) | Mass% | 46.0 | 44.0 | 42.0 |
| R1234yf | Mass% | 54.0 | 56.0 | 58.0 |
| Disproportionation reaction (3 Mpa) | - | Explosion | Non-explosion | Non-explosion |
| Burning velocity | cm/s | 5 | 4.7 | 4.4 |

The results in Table 1 show that in the refrigerant according to the present disclosure, disproportionation does not occur in HFO-1132(E) or HFO-1234yf when the amount of HFO-1132(E) is 44.0 mass% or less. Additionally, the burning velocity is 4.7 cm/s or less.

The GWP of HFO-1132(E) and FO-1216 was set to 1, and the GWP of R134a, HFO-1234yf, R125, and the mixed refrigerants was evaluated based on the values stated in the Intergovernmental Panel on Climate Change (IPCC), fourth report. The COP, refrigerating capacity, discharge temperature, and boiling point of R134a, HFO-1234yf, and the mixed refrigerants were determined by performing theoretical refrigeration cycle calculations for mixed refrigerants by using the Reference Fluid Thermodynamic and Transport Properties Database (Refprop 9.0) of the National Institute of Science and Technology (NIST) under the following conditions. The physical property values of HFO-1132(E) used for theoretical refrigeration cycle calculations were obtained from actual measurements.

Evaporating temperature: -30°C
Condensation temperature: 30°C
Superheating temperature: 5 K
Subcooling temperature: 5 K
Compressor efficiency: 70%

In Tables 2, 3, and 4, the "COP ratio" and the "refrigerating capacity ratio" are ratios (%) relative to R1234yf. In the tables, the "discharge temperature (°C)" refers to a temperature at which a refrigerant has the highest temperature in the refrigeration cycle according to the theoretical refrigeration cycle calculations of the mixed refrigerant. In the tables, the "boiling point (°C)" is a temperature at which the liquid phase of a mixed refrigerant has atmospheric pressure (101.33 kPa). In the tables, the "motor power consumption (%)" refers to electrical energy used to enable an electric vehicle to run, and is expressed as a ratio with respect to a power consumption when the refrigerant is HFO-1234yf.

In the tables, the "heater power consumption (%)" refers to electrical energy used to operate a heater by an electric vehicle, and is expressed as a ratio with respect to power consumption when the refrigerant is HFO-1234yf. In the tables, the "drivable distance" refers to a distance drivable by an electric vehicle equipped with a rechargeable battery having a constant electric capacity while having a heater turned on, and is expressed as a ratio (%) relative to a drivable distance (100%) when the electric vehicle is driven without a heater turned on (i.e., heater power consumption is 0).

Heating was performed by using an electric heater in the case of a refrigerant having a boiling point of more than -40°C, and using a heat pump in the case of a refrigerant having a boiling point of -40°C or less.

The power consumption when the heater was used was determined according to the following formula.

Power consumption when the heater was used = heating capacity/COP of heater

The COP of the heater refers to heating efficiency.

With regard to the heating efficiency, the COP of the heater is 1 in an electric heater, and the heater consumes an electrode equivalent to the motor power. That is, the power consumption of the heater is $E=E/(1+COP)$. In the case of a heat pump, the COP of the heater was determined by performing theoretical refrigeration cycle calculations for the mixed refrigerants using Refprop 9.0 (produced by NIST) under the following conditions.

Evaporating temperature: -30°C
Condensation temperature: 30°C
Superheating temperature: 5 K
Subcooling temperature: 5 K
Compressor efficiency: 70%

The drivable distance was calculated according to the following formula.

Drivable distance = (battery capacity)/(motor power consumption + heater power consumption)

Tables 2, 3, and 4 show these values together with the GWP of each mixed refrigerant. The COP and refrigerating capacity are ratios relative to HFO-1234y.

The coefficient of performance (COP) was determined by the following formula.

COP = (refrigerating capacity or heating capacity)/power consumption

Table 2

| Item | | Unit | Reference Example 1 | Comparative Example 1 | Comparative Example 2 | Comparative Example 3 | Example 1 | Example 2 | Example 3 |
|---|---|---|---|---|---|---|---|---|---|
| Composition ratio | HFO-1132 (E) | Mass% | 0.0 | 0.0 | 23.0 | 23.0 | 23.0 | 23.0 | 23.0 |
| | HFO-1234yf | Mass% | 0.0 | 100.0 | 77.0 | 73.5 | 70.0 | 67.0 | 56.2 |
| | R134a | Mass% | 100.0 | 0.0 | 0.0 | 0.0 | 7.0 | 10.0 | 20.8 |
| | R125 | Mass% | 0.0 | 0.0 | 0.0 | 0.0 | 0.0 | 0.0 | 0.0 |
| | FO-1216 | Mass% | 0.0 | 0.0 | 0.0 | 0.0 | 0.0 | 0.0 | 0.0 |
| GWP(AR4) | | - | 1430 | 4 | 3 | 53 | 103 | 146 | 300 |
| COP ratio (relative to R1234yf) | | % | 105 | 100 | 100 | 100 | 101 | 101 | 101 |
| Refrigerating capacity ratio (relative to R1234yf) | | % | 99 | 100 | 151 | 151 | 152 | 152 | 152 |
| Motor power consumption | | % | 100 | 100 | 100 | 100 | 100 | 100 | 100 |
| Heater power consumption | | % | 95 | 100 | 33 | 33 | 33 | 33 | 33 |
| Drivable distance (without a heater turned on) | | % | 100 | 100 | 100 | 100 | 100 | 100 | 100 |
| Drivable distance (with a heater turned on) | | % | 50 | 50 | 84 | 84 | 84 | 84 | 84 |
| Discharge temperature | | °C | 66.0 | 48.0 | 61.1 | 61.6 | 62.0 | 62.5 | 64.1 |
| Burning velocity | | cm/s | 0.0 | 1.5 | 2.5 | 2.0 | 1.5 | 1.5 or less | 1.5 or less |
| Boiling point | | °C | -26.1 | -29.5 | -44.2 | -44.0 | -43.8 | -43.7 | -43.2 |
| Heating method | | System | Electric heater | Electric heater | Heat pump | Heat pump | Heat pump | Heat pump | Heat pump |
| Disproportionation reaction (3 Mpa) | | - | Non-explosion | Non-explosion | Non-explosion | Non-explosion | Explosion | Explosion | Explosion |

| Item | | Unit | Comparative Example 5 | Comparative Example 6 | Example 4 | Example 5 | Example 6 | Example 7 | Comparative Example7 |
|---|---|---|---|---|---|---|---|---|---|
| 組成割合 | HFO-1132 (E) | Mass% | 23.0 | 12.0 | 14.0 | 20.0 | 30.0 | 44.0 | 50.0 |
| | HFO-1234 y f | Mass% | 52.0 | 67.2 | 65.2 | 59.2 | 48.2 | 35.2 | 42.5 |
| | R134a | Mass% | 25.0 | 20.8 | 20.8 | 20.8 | 20.8 | 20.8 | 7.5 |
| | R125 | Mass% | 0.0 | 0.0 | 0.0 | 0.0 | 0.0 | 0.0 | 0.0 |
| | FO-1216 | Mass% | 0.0 | 0.0 | 0.0 | 0.0 | 0.0 | 0.0 | 0.0 |
| GWP(AR4) | | - | 360 | 300 | 300 | 300 | 300 | 300 | 109 |
| COP ratio (relative to R1234yf) | | % | 101 | 101 | 101 | 101 | 101 | 101 | 100 |
| Refrigerating capacity ratio (relative to R1234yf) | | % | 152 | 129 | 134 | 146 | 165 | 190 | 202 |
| Motor power consumption | | % | 100 | 100 | 100 | 100 | 100 | 100 | 100 |
| Heater power consumption | | % | 33 | 100 | 33 | 33 | 33 | 33 | 33 |
| Drivable distance (without a heater turned on) | | % | 100 | 100 | 100 | 100 | 100 | 100 | 100 |
| Drivable distance (with a heater turned on) | | % | 84 | 50 | 84 | 84 | 84 | 84 | 84 |
| Discharge temperature | | °C | 64.9 | 58.8 | 59.9 | 62.8 | 67.1 | 72.7 | 72.3 |
| Burning velocity | | cm/s | 1.5 or less | 1.5 or less | 1.5 or less | 1.5 or less | 1.5 or less | 1.5 or less | 4.8 |
| Boiling point | | °C | -43.1 | -39.1 | -40.0 | -42.3 | -45.0 | -47.5 | -48.8 |
| Heating method | | System | Heat pump | Electric heater | Heat pump | Heat pump | Heat pump | Heat pump | Heat pump |
| Disproportionation reaction (3 Mpa) | | - | Non-explosion | Non-explosion | Non-explosion | Non-explosion | Non-explosion | Non-explosion | Explosion |

EP 4 592 614 A2

Table 3

| Item | | Unit | Reference Example 1 | Comparative Example 1 | Comparative Example 2 | Comparative Example 8 | Example 8 | Example 9 | Example 10 |
|---|---|---|---|---|---|---|---|---|---|
| Composition ratio | HFO-1132 (E) | Mass% | 0.0 | 0.0 | 23.0 | 23.0 | 23.0 | 23.0 | 23.0 |
| | HFO-1234yf | Mass% | 0.0 | 100.0 | 77.0 | 75.5 | 74.0 | 73.0 | 68.5 |
| | R134a | Mass% | 100.0 | 0.0 | 0.0 | 0.0 | 0.0 | 0.0 | 0.0 |
| | R125 | Mass% | 0.0 | 0.0 | 0.0 | 1.5 | 3.0 | 4.0 | 8.5 |
| | FO-1216 | Mass% | 0.0 | 0.0 | 0.0 | 0.0 | 0.0 | 0.0 | 0.0 |
| GWP(AR4) | | - | 1430 | 4 | 3 | 56 | 108 | 143 | 300 |
| COP ratio (relative to R1234yf) | | % | 105 | 100 | 100 | 100 | 100 | 100 | 100 |
| Refrigerating capacity ratio (relative to R1234yf) | | % | 99 | 100 | 151 | 152 | 153 | 154 | 158 |
| Motor power consumption | | % | 100 | 100 | 100 | 100 | 100 | 100 | 100 |
| Heater power consumption | | % | 95 | 100 | 33 | 33 | 33 | 33 | 33 |
| Drivable distance (without a heater turned on) | | % | 100 | 100 | 100 | 100 | 100 | 100 | 100 |
| Drivable distance (with a heater turned on) | | % | 50 | 50 | 84 | 84 | 84 | 84 | 84 |
| Discharge temperature | | °C | 66.0 | 48.0 | 61.1 | 61.1 | 61.1 | 61.2 | 61.2 |
| Burning velocity | | cm/s | 0.0 | 1.5 | 2.5 | 2.0 | 1.5 | 1.5 or less | 1.5 or less |
| Boiling point | | °C | -26.1 | -29.5 | -44.2 | -44.3 | -44.4 | -44.5 | -44.9 |
| Heating method | | System | Electric heater | Electric heater | Heat pump | Heat pump | Heat pump | Heat pump | Heat pump |
| Disproportionation reaction (3 Mpa) | | - | Non-explosion | Non-explosion | Non-explosion | Non-explosion | Non-explosion | Non-explosion | Non-explosion |

| Item | | Unit | Comparative Example 9 | Comparative Example 10 | Example 11 | Example 12 | Example 13 | Example 14 | Comparative Example 11 |
|---|---|---|---|---|---|---|---|---|---|
| Composition ratio | HFO-1132 (E) | Mass% | 23.0 | 10.0 | 11.5 | 20.0 | 30.0 | 44.0 | 50.0 |
| | HFO-1234yf | Mass% | 67.0 | 87.0 | 85.5 | 71.5 | 61.5 | 47.5 | 47.0 |
| | R134a | Mass% | 0.0 | 0.0 | 0.0 | 0.0 | 0.0 | 0.0 | 0.0 |
| | R125 | Mass% | 10.0 | 3.0 | 3.0 | 8.5 | 8.5 | 8.5 | 3.0 |
| | FO-1216 | Mass% | 0.0 | 0.0 | 0.0 | 0.0 | 0.0 | 0.0 | 0.0 |
| GWP(AR4) | | - | 353 | 109 | 109 | 300 | 300 | 300 | 107 |
| COP ratio (relative to R1234yf) | | % | 100 | 100 | 100 | 100 | 100 | 100 | 100 |
| Refrigerating capacity ratio (relative to R1234yf) | | % | 159 | 125 | 128 | 151 | 172 | 199 | 205 |
| Motor power consumption | | % | 100 | 100 | 100 | 100 | 100 | 100 | 100 |
| Heater power consumption | | % | 33 | 100 | 33 | 33 | 33 | 33 | 33 |
| Drivable distance (without a heater turned on) | | % | 100 | 100 | 100 | 100 | 100 | 100 | 100 |
| Drivable distance (with a heater turned on) | | % | 84 | 50 | 84 | 84 | 84 | 84 | 84 |
| Discharge temperature | | °C | 61.2 | 55.0 | 55.8 | 60.0 | 63.9 | 68.9 | 70.9 |
| Burning velocity | | cm/s | 1.5 or less | 1.5 or less | 1.5 or less | 1.5 or less | 1.5 or less | 1.5 or less | 4.8 |
| Boiling point | | °C | -45.0 | -39.2 | -40.0 | -44.0 | -46.5 | -48.8 | -49.2 |
| Heating method | | System | Heat pump | Electric heater | Heat pump | Heat pump | Heat pump | Heat pump | Heat pump |
| Disproportionation reaction (3 Mpa) | | - | Non-explosion | Non-explosion | Non-explosion | Non-explosion | Non-explosion | Non-explosion | Explosion |

Table 4

| Item | | Unit | Reference Example 1 | Comparative Example 1 | Comparative Example 2 | Comparative Example 12 | Comparative Example 13 | Example 15 | Example 16 | Example 17 |
|---|---|---|---|---|---|---|---|---|---|---|
| Composition ratio | HFO-1132 (E) | Mass% | 0.0 | 0.0 | 23.0 | 23.0 | 23.0 | 23.0 | 23.0 | 23.0 |
| | HFO-1234yf | Mass% | 0.0 | 100.0 | 77.0 | 72.0 | 67.0 | 62.0 | 52.0 | 37.0 |
| | R134a | Mass% | 100.0 | 0.0 | 0.0 | 0.0 | 0.0 | 0.0 | 0.0 | 0.0 |
| | R125 | Mass% | 0.0 | 0.0 | 0.0 | 0.0 | 0.0 | 0.0 | 0.0 | 0.0 |
| | FO-1216 | Mass% | 0.0 | 0.0 | 0.0 | 5.0 | 10.0 | 15.0 | 25.0 | 40.0 |
| GWP(AR4) | | - | 1430 | 4 | 3 | 3 | 3 | 3 | 3 | 2 |
| COP ratio (relative to R1234yf) | | % | 105 | 100 | 100 | 100 | 100 | 100 | 99 | 99 |
| Refrigerating capacity ratio (relative to R1234yf) | | % | 99 | 100 | 151 | 151 | 151 | 151 | 151 | 151 |
| Motor power consumption | | % | 100 | 100 | 100 | 100 | 100 | 100 | 100 | 100 |
| Heater power consumption | | % | 95 | 100 | 33 | 33 | 33 | 33 | 33 | 33 |
| Drivable distance (without a heater turned on) | | % | 100 | 100 | 100 | 100 | 100 | 100 | 100 | 100 |
| Drivable distance (with a heater turned on) | | % | 50 | 50 | 84 | 84 | 84 | 84 | 84 | 84 |
| Discharge temperature | | °C | 66.0 | 48.0 | 61.1 | 60.6 | 60.1 | 59.6 | 58.7 | 57.3 |
| Burning velocity | | cm/s | 0.0 | 1.5 | 2.5 | 2.3 | 2.0 | 1.5 | 1.5 or less | 1.5 or less |
| Boiling point | | °C | -26.1 | -29.5 | -44.2 | -44.1 | -44.0 | -43.9 | -43.7 | -43.4 |
| Heating method | | System | Electric heater | Electric heater | Heat pump | Heat pump | Heat pump | Heat pump | Heat pump | Heat pump |
| Disproportionation reaction (3 Mpa) | | - | Non-explosion | Non-explosion | Non-explosion | Non-explosion | Non-explosion | Non-explosion | Non-explosion | Non-explosion |

| Item | | Unit | Comparative Example 14 | Comparative Example 15 | Example 18 | Example 19 | Example 20 | Example 21 | Comparative Example 16 |
|---|---|---|---|---|---|---|---|---|---|
| Composition ratio | HFO-1132 (E) | Mass% | 23.0 | 10.0 | 12.5 | 20.0 | 30.0 | 44.0 | 50.0 |
| | HFO-1234yf | Mass% | 0.0 | 75.0 | 72.5 | 40.0 | 30.0 | 16.0 | 35.0 |
| | R134a | Mass% | 0.0 | 0.0 | 0.0 | 0.0 | 0.0 | 0.0 | 0.0 |
| | R125 | Mass% | 0.0 | 0.0 | 0.0 | 0.0 | 0.0 | 0.0 | 0.0 |
| | FO-1216 | Mass% | 77.0 | 15.0 | 15.0 | 40.0 | 40.0 | 40.0 | 15.0 |
| GWP(AR4) | | - | 1 | 3 | 3 | 2 | 2 | 1 | 2 |
| COP ratio (relative to R1234yf) | | % | 98 | 99 | 99 | 99 | 99 | 100 | 100 |
| Refrigerating capacity ratio (relative to R1234yf) | | % | 146 | 123 | 129 | 145 | 164 | 189 | 202 |
| Motor power consumption | | % | 100 | 100 | 100 | 100 | 100 | 100 | 100 |
| Heater power consumption | | % | 33 | 100 | 33 | 33 | 33 | 33 | 33 |
| Drivable distance (without a heater turned on) | | % | 100 | 100 | 100 | 100 | 100 | 100 | 100 |
| Drivable distance (with a heater turned on) | | % | 84 | 50 | 84 | 84 | 84 | 84 | 84 |
| Discharge temperature | | °C | 54.2 | 53.3 | 54.7 | 55.9 | 60.3 | 66.2 | 69.9 |
| Burning velocity | | cm/s | 1.5 or less | 1.5 or less | 1.5 or less | 1.5 or less | 1.5 or less | 1.5 or less | 4.8 |
| Boiling point | | °C | -42.3 | -38.7 | -40.0 | -42.5 | -45.1 | -47.6 | -48.8 |
| Heating method | | System | Heat pump | Electric heater | Heat pump | Heat pump | Heat pump | Heat pump | Heat pump |
| Disproportionation reaction (3 Mpa) | | - | Non-explosion | Non-explosion | Non-explosion | Non-explosion | Non-explosion | Non-explosion | Explosion |

The results in Table 2 show that when in the refrigerant according to the present disclosure, when the content of HFO-1132(E) is 14.0 to 44.0 mass%, the content of HFO-1234yf is 35.2 to 78.5 mass%, and the content of R134a is 7.0 to 20.8 mass%, based on the total of HFO-1132(E), HFO-1234yf, and R134a, the refrigerant according to the present disclosure has a GWP of 300 or less, a COP ratio of 100% or more relative to that of HFO-1234yf, a refrigerating capacity ratio of 134% or more relative to that of HFO-1234yf, a burning velocity of 1.5 cm/s or less, which is a burning velocity that, by containing 7.0 mass% or more of R134a, is reduced by 1.0 cm/s or more compared with the case in which R134a is not contained, and a boiling point of -40.0°C or less, and further does not undergo a disproportionation reaction at 3 MPa and 150°C.

The results in Table 3 show that in the refrigerant according to the present disclosure, when the content of HFO-1132(E) is 11.5 to 44.0 mass%, the content of HFO-1234yf is 47.5 to 85.5 mass%, and the content of R125 is 3.0 to 8.5 mass%, based on the total of HFO-1132(E), HFO-1234yf, and R125, the refrigerant according to the present disclosure has a GWP of 300 or less, a COP ratio of 100% or more relative to that of HFO-1234yf, a refrigerating capacity ratio of 129% or more relative to that of HFO-1234yf, a burning velocity that, by containing 15.0 mass% or more of FO-1216, is reduced by 1.0 cm/s or more, and a boiling point of -40.0°C or less, and further does not undergo a disproportionation reaction at 3 MPa and 150°C.

The results in Table 4 show that in the refrigerant according to the present disclosure, when the content of HFO-1132(E) is 12.5 to 44.0 mass%, the content of HFO-1234yf is 16.0 to 72.5 mass%, and the content of FO-1216 is 15.0 to 40.0 mass%, based on the total of HFO-1132(E), HFO-1234yf, and FO-1216, the refrigerant according to the present disclosure has a GWP of 3 or less, a COP ratio of 100% or more relative to that of HFO-1234yf, a refrigerating capacity ratio of 128% or more relative to that of HFO-1234yf, a burning velocity that, by containing 3.0 mass% or more of R125, is reduced by 1.0 cm/s or more, and a boiling point of -40.0°C or less, and further does not undergo a disproportionation reaction at 3 MPa and 150°C.

Description of the Reference Numerals

    1: Sample cell
    2: High-speed camera
    3: Xenon lamp
    4: Collimating lens
    5: Collimating lens
    6: Ring filter

List of embodiments

[Embodiment 1]

A composition comprising a refrigerant, wherein the refrigerant comprises trans-1,2-difluoroethylene (HFO-1132(E)), 2,3,3,3-tetrafluoropropene (HFO-1234yf), and 1,1,1,2-tetrafluoroethane (R134a), and the total content of HFO-1132(E), HFO-1234yf, and R134a is 99.5 mass% or more based on the total of the refrigerant.

[Embodiment 2]

The composition according to Embodiment 1, wherein the content of HFO-1132(E) is 14.0 to 44.0 mass%, the content of HFO-1234yf is 35.2 to 79.0 mass%, and the content of R134a is 7.0 to 20.8 mass%, based on the total of HFO-1132(E), HFO-1234yf, and R134a.

[Embodiment 3]

The composition according to Embodiment 1, wherein the content of HFO-1132(E) is 21.0 to 44.0 mass%, the content of HFO-1234yf is 35.2 to 72.0 mass%, and the content of R134a is 7.0 to 20.8 mass%, based on the total of HFO-1132(E), HFO-1234yf, and R134a.

[Embodiment 4]

A composition comprising a refrigerant, wherein the refrigerant comprises HFO-1132(E), HFO-1234yf, and pentafluoroethane (R125), and the total content of HFO-1132(E), HFO-1234yf, and R125 is 99.5 mass% or more based on the total of the refrigerant.

[Embodiment 5]

The composition according to Embodiment 4, wherein the content of HFO-1132(E) is 11.5 to 44.0 mass%, the content of HFO-1234yf is 47.5 to 85.5 mass%, and the content of R125 is 3.0 to 8.5 mass%, based on the total of HFO-1132(E), HFO-1234yf, and R125.

[Embodiment 6]

The composition according to Embodiment 4, wherein the content of HFO-1132(E) is 21.0 to 44.0 mass%, the content of HFO-1234yf is 47.5 to 76.0 mass%, and the content of R125 is 3.0 to 8.5 mass%, based on the total of HFO-1132(E), HFO-1234yf, and R125.

[Embodiment 7]

A composition comprising a refrigerant, wherein the refrigerant comprises HFO-1132(E), HFO-1234yf, and 1,1,2,3,3,3-hexafluoro-1-propene (FO-1216).

[Embodiment 8]

The composition according to Embodiment 7, wherein the content of HFO-1132(E) is 12.5 to 44.0 mass%, the content of HFO-1234yf is 16.0 to 72.5 mass%, and the content of FO-1216 is 15.0 to 40.0 mass%, based on the total of HFO-1132(E), HFO-1234yf, and FO-1216.

[Embodiment 9]

The composition according to Embodiment 7, wherein the content of HFO-1132(E) is 21.0 to 44.0 mass%, the content of HFO-1234yf is 16.0 to 64.0 mass%, and the content of FO-1216 is 15.0 to 40.0 mass%, based on the total of HFO-1132(E), HFO-1234yf, and FO-1216.

[Embodiment 10]

The composition according to any one of Embodiments 1 to 9, for use as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R502, R507, R513A, R1234yf, or R1234ze.

[Embodiment 11]

The composition according to any one of Embodiments 1 to 9, for use in operating an air-conditioning system for vehicles.

[Embodiment 12]

The composition according to Embodiment 11, wherein the air-conditioning system is for use in gasoline vehicles, hybrid vehicles, electric vehicles, or hydrogen vehicles.

[Embodiment 13]

The composition according to any one of Embodiments 1 to 9, wherein the composition further comprises a refrigeration oil, for use as a working fluid in a refrigeration apparatus.

[Embodiment 14]

A refrigeration method comprising a step of operating a refrigeration cycle using the composition of any one of Embodiments 1 to 9.

[Embodiment 15]

A refrigeration apparatus comprising the composition of any one of Embodiments 1 to 9 as a working fluid.

**Claims**

1. A composition comprising a refrigerant comprising

   - based on the entire refrigerant, a total of ≥ 99.5 mass% of HFO-1132(E), HFO-1234yf, and pentafluoroethane (R125), and
   - based on the total of HFO-1132(E), HFO-1234yf, and R125, 11.5-44.0 mass% of HFO-1132(E), 47.5-85.5 mass% of HFO-1234yf, and 3.0-8.5 mass% of R125.

2. The composition of claim 1, which contains 21.0-44.0 mass% of HFO-1132(E), 47.5-76.0 mass% of HFO-1234yf, and 3.0-8.5 mass% of R125, based on the total of HFO-1132(E), HFO-1234yf, and R125.

3. The use of the composition of claim 1 or 2 as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R502, R507, R513A, R1234yf, or R1234ze.

4. The use of the composition of claim 1 or 2 in operating an air-conditioning system for vehicles, preferably gasoline vehicles, hybrid vehicles, electric vehicles, or hydrogen vehicles.

5. The composition of claim 1 or 2 which further comprises a refrigeration oil.

6. The use of the composition of claim 5 as a working fluid in a refrigeration apparatus.

7. A refrigeration method comprising operating a refrigeration cycle using the composition of claim 1 or 2.

8. A refrigeration apparatus comprising the composition of any of claim 1 or 2 as a working fluid.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015141678 A